# EUROPÄISCHE PATENTANMELDUNG

(11) **EP 2 757 805 A2**
(43) Veröffentlichungstag der Anmeldung: **23.07.2014**
(21) Anmeldenummer: 13005457.0
(22) Anmeldetag: 20.11.2013
(51) Int. Cl.: H04Q 9/00

(54) **Sensorknoten**

(30) Priorität: 18.01.2013 DE 102013000803
(71) Anmelder: Astrium GmbH, 82024 Taufkirchen (DE)
(72) Erfinder: Sebald, Johannes, 27721 Ritterhude (DE); Kesuma, Hendra, 28277 Bremen (DE)
(74) Vertreter: Hansmann, Dierk

(57) **Zusammenfassung**

Eine Vorrichtung in Form eines Sensorknotens auf der Basis einer anwendungsspezifischen integrierten Schaltung umfasst Sensoren, wenigstens ein optisches Sender- und Empfänger-Modul, Energy-Harvesting-Elemente, die mit einer Power-Management-Einheit zusammenwirken, sowie wenigstens ein Datenverarbeitungsmodul. Die Energy-Harvesting-Elemente umfassen wahlweise je einen thermoelektrischen Generator, eine Solarzelle oder ein Piezoelement und wirken mit einem Akkumulator oder einem Netzteil zusammen. Außerdem umfasst die Vorrichtung wenigstens ein Demodulatormodul, Kennzeichnungsbrücken, wenigstens je ein Taktsignalmodul und ein Flash-ADC sowie Konditionierungsmodule und Kalibrierungsbrücken.

## Beschreibung

Die Erfindung betrifft eine Vorrichtung in Form eines Sensorknotens auf der Basis einer anwendungsspezifischen integrierten Schaltung, die Sensoren sowie wenigstens ein optisches Sender- und Empfänger-Modul, wenigstens ein Datenverarbeitungsmodul und eine Reihe von Energy-Harvesting-Elementen umfasst.

Es ist bereits bekannt, dass für Sensorknoten Mikrokontroller, digitale Signalprozessoren, oder auch sogenannte Field Programmable Gate Arrays (engl.: FPGA) als Standardprodukte mit einer großen Auswahl von Optionen Verwendung finden. Allerdings enthalten diese bekannten Anordnungen, sofern sie für eine spezielle Anwendung, die die beste Übereinstimmung liefert, ausgelegt sind, häufig durch die Realisierung mittels logischer Gatter noch eine Reihe ungenutzter oder redundanter Transistoren bzw. Ein- oder Ausgänge, was zu einem vergleichsweise hohen Energieverbrauch führt.

So verbrauchen bei einem bereits bekannten drahtlosen Sensorknoten auf der Basis eines Mikrokontrollers die RF-Empfänger vergleichsweise viel Strom, auch wenn sich der Mikrokontroller im Standby-Modus befindet. Der Mikrokontroller verwendet dabei im Allgemeinen eine effiziente Anzahl der Transistoren und der Taktzyklen, allerdings ist diese Verwendung nicht optimal. Eine optimale Verwendung ist dagegen zwar bei digitalen Signalprozessoren (DSP) zu finden, jedoch sind diese für einfache Sensorknoten-Anwendungen nicht erforderlich. Die oben erwähnten Field Programmable Gate Arrays, FPGA, sind kaum sparsamer als Mikrokontroller.

In der US 2007 / 0114422 A1 ist eine Vorrichtung in Form eines Sensorknotens auf der Basis einer anwendungsspezifischen integrierten Schaltung der eingangs genannten Art vorgeschlagen worden, die die oben genannten Komponenten umfasst. Ähnliche Anordnungen sind daneben auch in den Artikeln Warneke, B.A. et al., "An autonomous 16 mm3 solar-powered node for distributed wireless sensor networks", Proceedings of IEEE Sensors, 2002, Vol.2, pp.1510-1515, Zhang, F. et al., "A batteryless 19IJW MICS/ISM-band energy harvesting body area sensor node SoC", Solid-State Circuits Conference Digest of Technical Papers (ISSCC), 2012 IEEE International, 19-23 Feb. 2012, pp. 298-300, und Zhang, X. et al., "An Energy-Efficient ASIC for Wireless Body Sensor Networks in Medical Applications", IEEE Transactions on Biomedical Circuits and Systems, Vol.4, No.1, pp.11-18, Feb. 2010, beschrieben worden.

Aufgabe der vorliegenden Erfindung ist es, einen derartigen Sensorknoten so auszubilden, dass er einen signifikant reduzierten Energieverbrauch aufweist.

Diese Aufgabe wird erfindungsgemäß durch einen Sensorknoten gelöst, bei dem die Energy-Harvesting-Elemente mit einer Power-Management-Einheit verbunden sind und bei dem optische Sender-und Empfänger-Module der Anordnung über CE-Signale von der Power-Management-Einheit aktivierbar sind.

Eine solche Kombination besitzt eine optimale Chipgröße sowie optimale Belegungen der Ein-/Ausgangspins und weist zudem durch den Einsatz eines optischen Empfängermoduls auf der Basis einer anwendungsspezifischen integrierten Schaltung (Application-Specific Integrated Circuit, ASIC) einen signifikant verringerten Stromverbrauch auf.

Zwar ist es aus dem Artikel "Power Management for Energy Harvesting Wireless Sensors", Arms, S.W. et al., SPIE Int'1 Symposium on Smart Structures & Smart Materials, 9 March 2005, San Diego, CA, im Prinzip bereits bekannt, dass im Rahmen des Power-Managements von Sensor-Nodes bei Bedarf einzelne Module durch CE-Signale aktiviert und deaktiviert werden können, jedoch handelt es sich bei dieser bekannten Anordnung nicht um eine Architektur ohne "digital cores" in Form einer anwendungsspezifischen integrierten Schaltung zur Realisierung eines möglichst energieeffizienten Sensorknotens.

Vorteilhafte Weiterbildungen der erfindungsgemäßen Anordnung sind in den weiteren Ansprüchen enthalten. Die Erfindung und ihre Weiterbildungen weisen dabei insbesondere die nachfolgenden Vorteile auf:
- Durch den optischen Empfänger bzw. Sender werden elektromagnetische Störungen vermieden und im Vergleich zu Verfahren wie zum Beispiel Hochfrequenz- oder Ultraschall-Übertragung Energie gespart.
- Die Anwendung eines Flash-Analog-Digital-Konverters (ADC) erlaubt eine schnelle analog/digital Umwandlung und benötigt kein Taktsignal.
- Der Einsatz von Kalibrierungsbrücken und Kennzeichnungsbrücken vermeidet ansonsten erforderliche konventionelle Kalibrierungsmethoden mit programmierbaren Speichern (EEPROM) und blowable fuses.
- Die Signalleitungen ermöglichen je nach dem Bedarf des Moduls zu einem bestimmten Zeitpunkt ein effizientes Leistungsmanagement.
- Es gibt mehrere Sensoren mit einer jeweils eigenen Konditionierung, die eingesetzt werden können.
- Die Power-Management-Einheit (PME) kann mehrere Energiequellen effizient verarbeiten und im Bedarfsfall Energie zwischenspeichern, um so den effizientesten Energieeinsatz zu ermöglichen.
- Der Sensorknoten kann Daten auch über Kabel übertragen und wahlweise auch mit einem Netzteil versorgt werden.

In weiterer Ausgestaltung der Erfindung können auch mehr als zwei thermoelektrische Generatoren (TEG) mit jeweils zugeordnetem Gleichstrom-Wandler (DD-DC) vorgesehen sein. Weiterhin können mehr als zwei der folgenden Teile eingesetzt werden: Solarzellen, Piezoelemente, Batterien und Akkumulatoren. Die Kombinationen dieser Komponenten bildet zusammen mit sogenannten Enery-Harvesting-Elementen eine Power-Management-Einheit (PME).

Die Sensoren können unterschiedlicher Art sein und beispielsweise für die Erfassung von Temperatur, Druck und Feuchtigkeit ausgebildet sein.

Das Protokoll, d.h. der Modulator, sorgt für eine energiesparsame Modulationsmethode für das optische Sender- und Empfängermodul und für die Datenübertragung per Kabel.

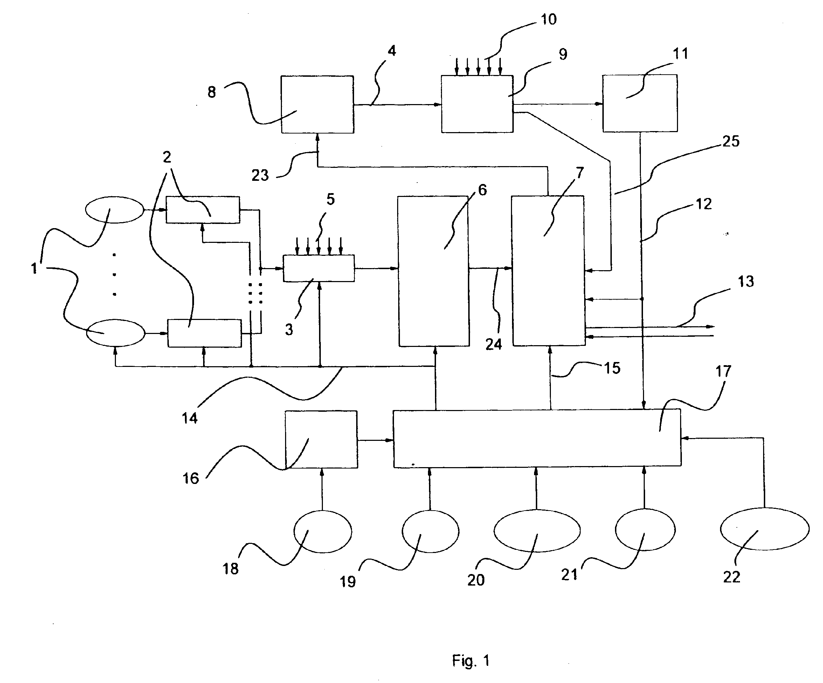

Nachfolgend soll die Erfindung anhand eines in der Zeichnung dargestellten Ausführungsbeispiels näher erläutert werden.

Die Figur zeigt den schematischen Aufbau eines Sensorknotens, der aus einer Vielzahl von Komponenten 1 bis 22 besteht. Dazu zählen unter anderem eine Reihe verschiedener Sensoren 1, ein optisches Sender- und Empfänger-Modul 8 sowie verschiedene sogenannte Energy-Harvesting-Elemente, im Fall des hier dargestellten Ausführungsbeispiels ein thermoelektrischen Generator 18, eine Solarzelle 19 sowie ein Piezoelement 20, die mit einer Power-Management-Einheit 17 zusammenwirken, die außerdem mit einem Akkumulator 21 sowie im Fall des hier dargestellten Ausführungsbeispiels einem Netzteil 22 verbunden ist. Die übrigen in der Figur dargestellten Komponenten sowie die von diesen erzeugten Signale werden jeweils im Zusammenhang mit ihrer Funktion bzw. ihrer Generierung beschrieben.

Das optische Sender und Empfänger-Modul 8 bekommt ein Signal vom Access-Point oder von anderen Sensorknoten. Daraufhin wird das Signal bzw. werden die Empfangsdaten 4 an das Demodulatormodul 9 weitergeschickt. Dort sind die Sensorknoten mit Kennzeichnungsbrücken 10 kodiert, um diese jeweils mit einer Kennnummer zu versehen.

Weiter wird das Signal des anderen Sensorknotens oder des Access-Points mit der Kennnummer verglichen und es wird im Fall der Übereinstimmung ein Taktsignalmodul 11 aktiviert. Dieses leitet das Taktsignal 11 und ein Aktivierungssignal 12 an die Power-Management-Einheit 17 weiter, die dann daraufhin CE-Signale 14, 15 einschaltet. Des Weiteren aktiviert das erste CE-Signal 14 nacheinander die Sensoren 1 zusammen mit jeweiligen Konditionierungsmodulen 2, ein Flash-ADC 3 sowie ein Datenverarbeitungsmodul 6. Die Messergebnisse der Sensoren 1 werden dabei durch die zugeordneten Konditionierungsmodule 2, die für den passenden Spannungsbereich am Eingang des Flash-AD-Wandlers 3 sorgen, angepasst.

Kalibrierungsbrücken 5 sind für die Kalibrierung des Flash-ADCs 3 zuständig. Das am Digitalausgang des ADCs gebildete Signal wird im Datenverarbeitungsmodul 6 prozessiert. Das zweite CE-Signal 15 aktiviert ein Protokoll- bzw. Modulatormodul 7, das modulierte Übertragungsdaten 23 erzeugt, indem es die Messdaten 24 aus dem Datenverarbeitungsmodul 6 zusammen mit einer Kennung 25 aus dem Demodulator 9 mittels eines Protokolls zum optischen Sender- und Empfänger-Modul 8 und zur Datenübertragung mittels eines Kabels 13 verschickt.

## Patentansprüche

1. Vorrichtung in Form eines Sensorknotens auf der Basis einer anwendungsspezifischen integrierten Schaltung, die Sensoren sowie wenigstens ein optisches Sender- und Empfänger-Modul, wenigstens ein Datenverarbeitungsmodul und eine Reihe von Energy-Harvesting-Elementen umfasst, **dadurch gekennzeichnet, dass** die Energy-Harvesting-Elemente (18, 19, 20) mit einer Power-Management-Einheit (17) verbunden sind und dass optische Sender-und Empfänger-Module der Anordnung über CE-Signale von der Power-Management-Einheit aktivierbar sind.

2. Vorrichtung gemäß Anspruch 1, **dadurch gekennzeichnet, dass** die Energy-Harvesting-Elemente wenigstens je einen thermoelektrischen Generator (18), eine Solarzelle (19) sowie ein Piezoelement (20) umfassen.

3. Vorrichtung nach Anspruch 2, **dadurch gekennzeichnet, dass** die Energy-Harvesting-Elemente (18, 19, 20) mit einem Akkumulator (21) zusammenwirken.

4. Vorrichtung nach Anspruch 2 oder 3, **dadurch gekennzeichnet, dass** die Energy-Harvesting-Elemente (18, 19, 20) mit einem Netzteil (22) zusammenwirken.

5. Vorrichtung nach einem der Ansprüche 1 bis 4, **dadurch gekennzeichnet, dass** sie wenigstens ein Demodulatormodul (9) umfaßt.

6. Vorrichtung nach einem der Ansprüche 1 bis 5, **dadurch gekennzeichnet, dass** sie Kennzeichnungsbrücken (10) umfasst.

7. Vorrichtung nach einem der Ansprüche 1 bis 6, **dadurch gekennzeichnet, dass** sie wenigstens ein Taktsignalmodul (11) umfaßt.

8. Vorrichtung nach einem der Ansprüche 1 bis 7, **dadurch gekennzeichnet, dass** sie wenigstens ein Flash-ADC (3) umfaßt.

9. Vorrichtung nach einem der Ansprüche 1 bis 8, **dadurch gekennzeichnet, dass** sie Konditionierungsmodule (2) umfaßt, die mit den Sensoren (1) zusammenwirken.

10. Vorrichtung nach einem der Ansprüche 1 bis 9, **dadurch gekennzeichnet, dass** sie Kalibrierungsbrücken (5) umfaßt.
